(19) Europäisches Patentamt
European Patent Office
Office européen des brevets

(11) Veröffentlichungsnummer : **0 406 337 B1**

(12) # EUROPÄISCHE PATENTSCHRIFT

(45) Veröffentlichungstag der Patentschrift :
**21.04.93 Patentblatt 93/16**

(51) Int. Cl.⁵ : **B60R 21/32**

(21) Anmeldenummer : **89909557.4**

(22) Anmeldetag : **22.08.89**

(86) Internationale Anmeldenummer :
**PCT/EP89/00996**

(87) Internationale Veröffentlichungsnummer :
**WO 90/02062 08.03.90 Gazette 90/06**

(54) **ELEKTRONISCHE EINRICHTUNG UND BETRIEBSVERFAHREN.**

(30) Priorität : **26.08.88 DE 3828950**
**09.09.88 PCT/EP88/00820**
**02.08.89 DE 3925594**

(43) Veröffentlichungstag der Anmeldung :
**09.01.91 Patentblatt 91/02**

(45) Bekanntmachung des Hinweises auf die
Patenterteilung :
**21.04.93 Patentblatt 93/16**

(84) Benannte Vertragsstaaten :
**DE FR GB IT SE**

(56) Entgegenhaltungen :
**EP-A- 0 283 737**
**EP-A- 0 284 728**

(56) Entgegenhaltungen :
**DE-A- 2 217 030**
**DE-A- 3 412 798**
**DE-A- 3 506 487**
**US-A- 4 158 191**
**US-A- 4 835 513**

(73) Patentinhaber : **ROBERT BOSCH GMBH**
**Postfach 30 02 20**
**W-7000 Stuttgart 30 (DE)**

(72) Erfinder : **SCHUMACHER, Hartmut**
**Abstatter Strasse 31**
**W-7000 Stuttgart 40 (DE)**
Erfinder : **CRISPIN, Norbert**
**Spitalgasse 2**
**W-7145 Markgröningen (DE)**
Erfinder : **MATTES, Bernhard**
**Querstrass 41**
**W-7123 Sachsenheim (DE)**

EP 0 406 337 B1

## Beschreibung

### Stand der Technik

Die Erfindung geht aus von einer elektronischen Einrichtung nach der Gattung des Anspruchs 1, bzw. von einem Verfahren nach der Gattung des Anspruchs 15.

Eine gattungsgleiche Einrichtung ist aus 1141 Ingenieurs de l'Automobile (1982) No. 6, Seiten 69 bis 77 bekannt. Für elektronische Einrichtungen dieser Art ist eine Überprüfbarkeit aller für die Funktion wesentlichen Bauelemente von ausschlaggebender Bedeutung, da nur auf diese Weise eine hohe Betriebssicherheit gewährleistet werden kann, die für Sicherheitseinrichtungen dieser Art erforderlich ist. Aus DE-A-22 22 038 ist es zur Überprüfung des Zündelements einer solchen Einrichtung bekannt, eine Konstantstromquelle mit dem Zündelement zu verbinden und eine Vergleichsschaltung zum Messen des Spannungsabfalls am Zündelement vorzusehen. hierbei handelt es sich um zusätzliche Schaltungsmittel, die neben den Ansteuermitteln der Zündelemente für den Prüfungszweck vorzusehen sind. Nachteilig bei den bekannten Einrichtungen ist weiterhin, daß die Zündelemente zweipolig mit sie beaufschlagenden Leistungsendstufen verbunden sind, so daß die Gefahr einer unbeabsichtigten Aktivierung der Zündelemente, beispielsweise bei Montagearbeiten, nicht völlig auszuschließen ist. Schließlich ist eine Überprüfung der die Zündelemente ansteuernden Endstufen nur mit Hilfe eines zusätzlichen mechanisch betätigbaren Schalters möglich, der die Endstufen im normalen Betriebszustand, wenn also keine Gefahrensituation vorliegt, von der Stromversorgung abtrennt. Der Ein-Zustand dieses mechanischen Schalters ist aber nicht ohne weiteres überprüfbar.

Aus EP-A-0 284 728 ist weiterhin eine elektronische Einrichtung mit einer zu einem Zündelement in Serie geschalteten Kapazität bekannt, wobei das Zündelement mit dem Masseanschluß verbunden ist, und wobei diese Einrichtung eine Reserve-Energiequelle und eine Schaltungsanordnung zur Verbindung der elektrischen Energiequelle mit der Zündpille aufweist, und wobei die Verbindungsmittel eine Mehrzahl von unabhängig voneinander ansteuerbaren Schaltern umfassen, die in Serie zum Zündelement geschaltet sind und welche durch zugeordnete Kontrolleinrichtungen nach Feststellung einer Unfallsituation angesteuert werden. Schließlich zeigt diese Druckschrift auch noch einen Auswerter zur Überwachung der elektrischen Signale, die bei Verbindung der Zündpille mit der Schaltungsanordnung auftreten und zum Vergleich dieser Signale mit in Speichermitteln abgespeicherten Sollwerten.

### Vorteile der Erfindung

Die erfindungsgemäße Einrichtung mit den kennzeichnenden Merkmalen des Anspruchs 1 hat demgegenüber zahlreiche Vorteile. So kann ein direktes Anlegen einer Gleichspannung, z. B. der Versorgungsspannung des Fahrzeugs, an die zum Zündelement führenden Zündleitungen nicht zu einer unbeabsichtigten Auslösung des Zündelements führen, was bei bisherigen Einrichtungen nicht auszuschließen ist. Da entweder das Zündelement selbst oder die mit dem Zündelement in Serie geschaltete Kapazität einseitig mit dem Masseanschluß verbunden ist, wird ein gewollter Zündvorgang des Zündelements über nur eine einzige Zündleitung veranlaßt. Dies reduziert die Kosten für Kabelverbindungen sowie die Übergangswiderstände im Zündkreis, verringert die notwendigen elektrischen Verbindungen zur Auswerteschaltung und erhöht insgesamt die Betriebssicherheit, da die Zahl der Leitungen, die beschädigt werden könnten, verringert wird. Die erfindungsgemäße Einrichtung zeichnet sich weiter dadurch aus, daß zur Ansteuerung des Zündelements im Gegentakt betriebene Stromquellen verwendet werden, die durch eine Auswerteschaltung auf bestimmte vorgebbare Stromwerte gesetzt werden können. Der Gegentaktbetrieb erhöht die Funktionssicherheit der Einrichtung gegen Fehlauslösungen des Zündelements bei einer Störung der elektronischen Einrichtung, da eine einseitige bzw. unsymmetrische Ansteuerung durch lediglich eine Stromquelle auch auf längere Dauer nicht zu einer ungewollten Zündung des Zündelements führen kann. Eine beabsichtigte Zündung des Zündelements ist weiter nur durch ein mehrmaliges, aufeinander folgendes Ansteuern der Stromquellen im Gegentaktbetrieb möglich.

Wenn nun durch eine sehr unwahrscheinliche Störungsart auch der Ansteuerrythmus der Stromquellen gestört sein sollte, kann bei der erfindungsgemäßen Einrichtung ein irrtümlich eingeleiteter Zündvorgang noch vor der Zündung der Zündelements abgebrochen werden. Beim Stand der Technik dagegen führt eine Aktivierung des Zündelements irreversibel zu dessen Zündung, Schließlich kann, wenn keine Messungen und Prüfungen an dem das Zündelement enthaltenden Zündkreis und an den das Zündelement beaufschlagenden Endstufen durchgeführt werden, eine das Zündelement beaufschlagende Stromquelle ständig leitend gesteuert werden, was den niederohmigen Abschluß des Zündelements zur Folge hat. Dadurch läßt sich die Sicherheit gegen elektromagnetische Störungen, insbesondere die Sicherheit gegen ein ungewolltes Auslösen des Zündelements durch elektromagnetische Störungen, erheblich vergrößern.

Zeichnung

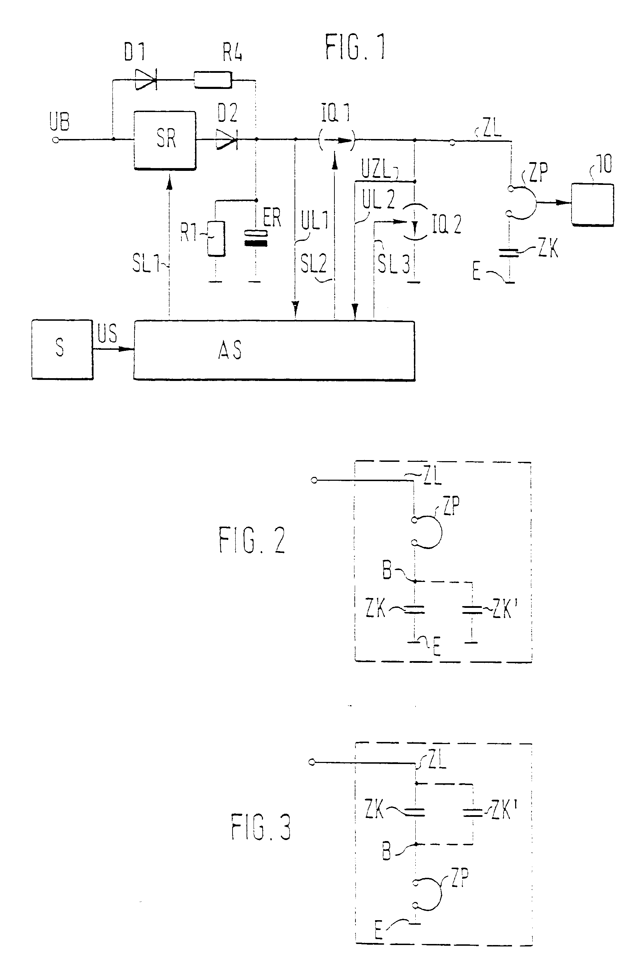

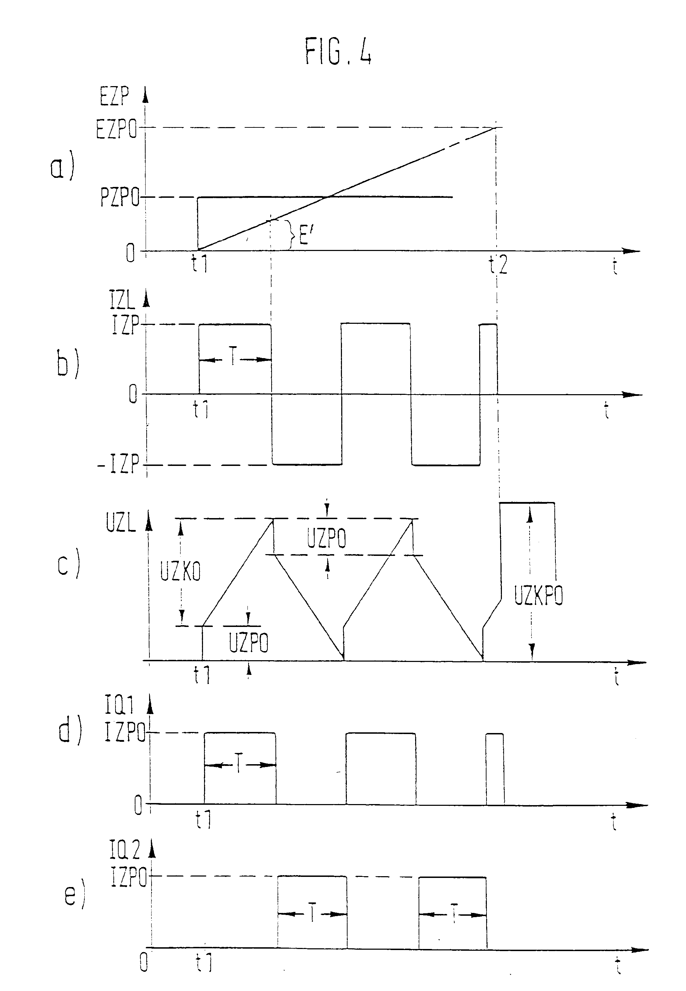

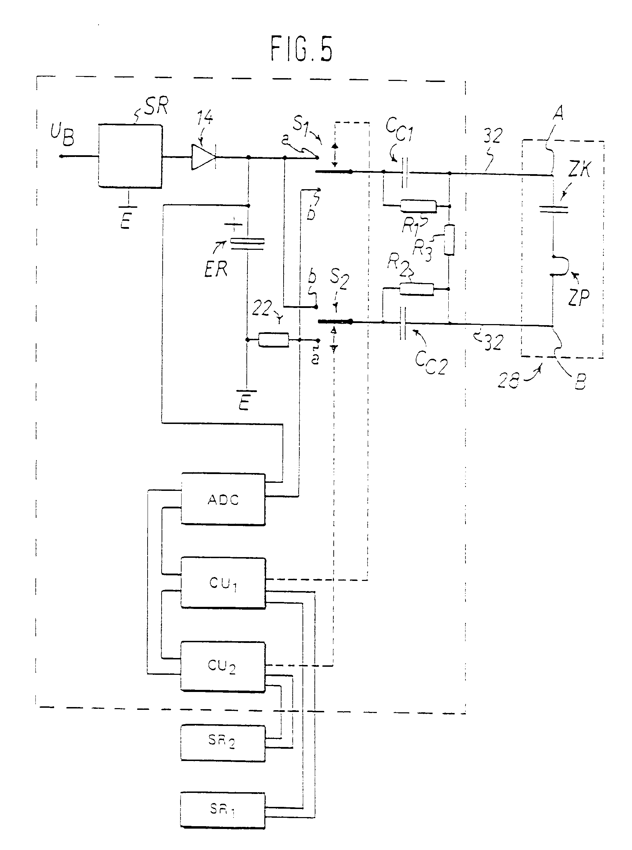

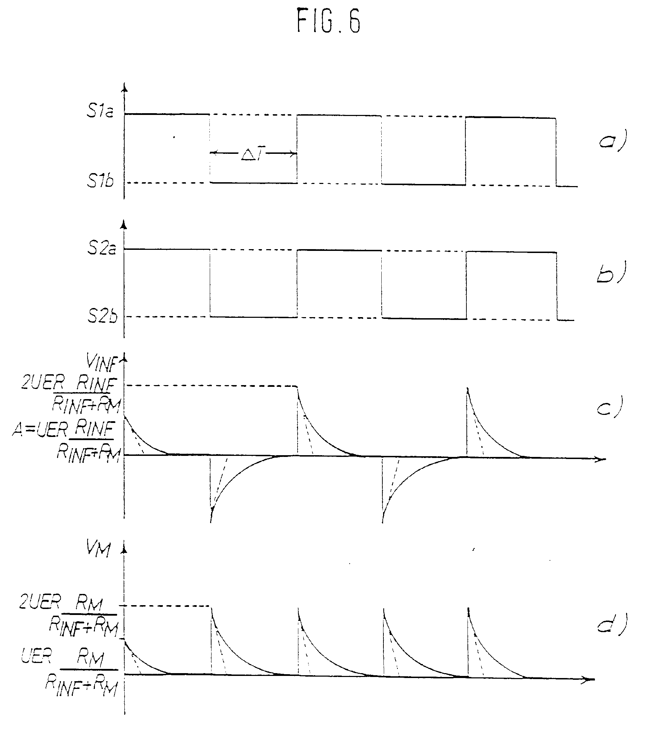

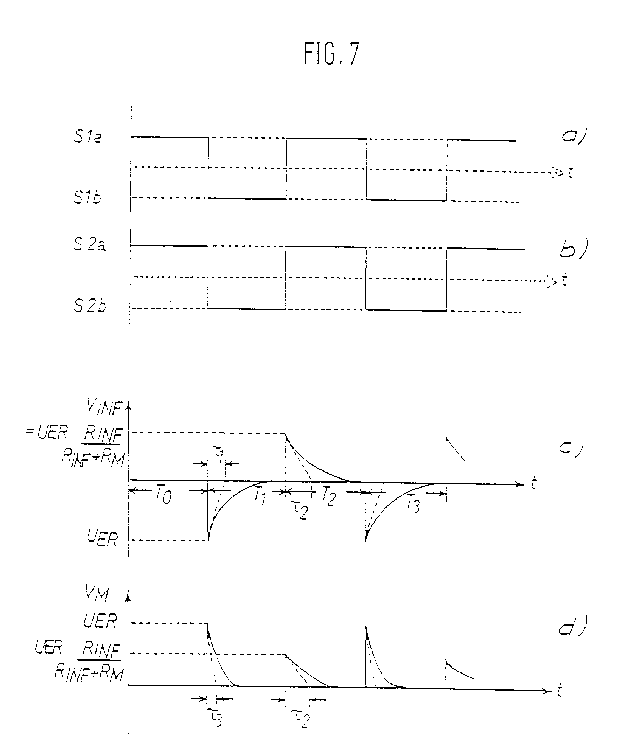

Ausführungsbeispiele der Erfindung sind in der Zeichnung dargestellt und in der nachfolgenden Beschreibung näher erläutert. Es zeigen Fig. 1 einen Stromlaufplan eines Ausführungsbeispiels der elektronischen Einrichtung, Fig. 2 eine Schaltungseinzelheit des Stromlaufplans nach Fig. 1, Fig. 3 eine Schaltungseinzelheit eines weiteren Ausführungsbeispiels der elektronischen Einrichtung, Fig. 4a bis Fig. 4e diverse Impulsdiagramme in Verbindung mit dem Stromlaufplan gemäß Fig. 1 bis Fig. 3, Fig. 5 ein weiteres Ausführungsbeispiel der Erfindung mit einem Analog-Digital-Wandler, Fig. 6a bis 6d und Fig. 7a bis Fig. 7d Implusdiagramme in Verbindung mit dem Ausführungsbeispiel nach Fig. 5.

Beschreibung der Ausführungsbeispiele

Eine elektronische Einrichtung zum Ansteuern von Sicherungsmitteln für Fahrzeuginsassen umfaßt einen beschleunigungsempfindlichen Sensor S, der mit einer Auswerteschaltung AS verbunden ist. Die elektronische Einrichtung umfaßt weiter ein Zündelement ZP, bei dem es sich vorzugsweise um eine "Zündpille" handelt. Eine Zündpille umfaßt beispielsweise einen durch Stromfluß erhitzbaren Widerstandsdraht, der mit einer pyrotechnischen Kette verbunden ist, die durch die beim Stromfluß entstehende Wärmeentwicklung aktivierbar ist. Die Zündpille ZP ihrerseits ist mit einem Sicherungsmittel 10, wie beispielsweise ein aufblasbarer Gassack (Airbag) verbunden. Zur Stromversorgung der elektronischen Einrichtung ist ein Schaltregler SR vorgesehen, dessen Eingangsanschluß mit er Bordspannung des Fahrzeugs UB verbunden ist. Der Ausgangsanschluß des Schaltreglers ist über eine in Flußrichtung gepolte Diode D2 mit einer Energiereserve ER in Form eines eine große Kapazität aufweisenden Kondensators verbunden. Parallel zur Energiereserve ER ist ein relativ hochohmiger Widerstand R1 nach Masse geschaltet. Parallel zu der Serienschaltung des Schaltreglers SR und der Diode D2 sind die in Serie geschalteten Bauelemente Diode D1 und Widerstand R4 angeordnet. Die Kathode der Diode D2 ist mit dem Eingangsanschluß einer ersten steuerbaren Stromquelle IQ1 verbunden, deren Ausgangsanschluß über die Zündleitung ZL mit dem ersten Anschluß des Zündelements ZP verbunden ist. Der zweite Anschluß des Zündelements ZP ist mit dem ersten Anschluß einer Kapazität ZK verbunden, deren zweiter Anschluß mit dem Masseanschluß E verbunden ist. Parallel zu der Serienschaltung von Zündelement ZP und Kapazität ZK ist eine zweite steuerbare Stromquelle IQ2 geschaltet. Die Auswerteschaltung AS ist über Steuerleitungen SL1, SL2, SL3 mit dem Schaltregler SR, der ersten steuerbaren Stromquelle IQ1 und der zweiten steuerbaren Stromquelle IQ2 verbunden. Vom Verbindungspunkt zwischen der Kathode der Diode D2 und dem positiven Anschluß der Energiereserve ER, sowie von der Zündeleitung ZL führen Verbindungsleitungen UL1 bzw. UL2 zur Auswerteschaltung AS.

Die Stromversorgung der elektronischen Einrichtung nach Fig. 1 umfaßt einen Schaltregler SR, der eingangsseitig mit der Betriebsspannungsquelle UB, beispielsweise dem Bordnetz eines Kraftfahrzeugs, verbunden ist und der die als Energiereserve ER vorgesehene Kapazität auf eine höhere Spannung UER als die Betriebsspannung UB auflädt. Zweckmäßig liegt die Spannung UER höher als etwa das 2-fache der Betriebsspannung UB. Die Dioden D1 und D2 sind Entkopplungsdioden, die die Sicherheit, beispielsweise gegen Falschpolung, erhöhen. Nach einem Ausfall des Schaltreglers SR steht über die Diode D1 und den Widerstand R4 mindestens noch die Betriebsspannung UB an der Energiereserve ER zur Verfügung. R1 ist ein hochohmiger Entladewiderstand, der bei gesperrtem Schaltregler SR zur Überwachung der Energiereserve ER dienen kann. Durch Messen des Entladestroms durch den Widerstand R1 ist es nämlich auf einfache Weise möglich, den Energieinhalt der Energiereserve ER ständig zu überprüfen. IQ1 ist eine erste steuerbare Stromquelle, die, gesteuert von der Auswerteschaltung AS, Strom zum Zünden und Prüfen des Zündelements ZP in Vorwärtsrichtung, das heißt aus der Zündleitung ZL heraus in das Zündelement ZP liefert. IQ2 ist eine zweite, von der Auswerteschaltung AS gesteuerte Stromquelle bzw. -senke, die einen vom Zündelement ZE in die Zündleitung ZL zurückfließenden Strom aufnimmt. Die Auswerteschaltung AS wertet das Ausgangssignal US des beschleunigungsempfindlichen Sensors S aus und entscheidet, ob bei einer sich ankündigenden Unfallsituation das Zündelement ZP zu zünden ist, das dann seinerseits das Rückhaltemittel 10 zum Schutz der Fahrzeuginsassen aktiviert. Der Sensor S erfaßt die auf das Fahrzeug einwirkende Beschleunigung und gibt beispielsweise ein beschleunigungsproportionales Ausgangssignal US ab. Die Auswerteschaltung AS steuert weiter über die Steuerleitung SL1 den Schaltregler SR, so daß dieser sich entweder im Sperrzustand befindet oder die Betriebsspannung UD in eine höhere Spannung UER umwandelt. Die Auswerteschaltung AS steuert weiter über die Steuerleitung SL2 die erste steuerbare Stromquelle IQ1, so daß diese entweder sperrt oder Prüfstrom bzw. Zündstrom für die Prüfung bzw. Zündung des Zündelements ZP liefert. Über die Steuerleitung SL3 steuert die Auswerteschaltung AS die zweite stuerbare Stromquelle (-senke) IQ2 derart, daß sie entweder sperrt oder den in Rückwärtsrichtung, das heißt aus dem Zündelement ZP in die Zündleitung ZL fließenden Prüfstrom bzw. Zündstrom aufnimmt. Die Auswerteschaltung AS erfaßt weiter über die Leitung UL1 die Span-

3

nung UER an der Energiereserve ER zur ständigen Überwachung des Ladezustands der Energiereserve ER und zur Bestimmung ihres Energieinhaltes sowie zur Bestimmung der maximal zur Verfügung stehenden Zündspannung für das Zündelement ZP. Die Auswerteschaltung AS überwacht weiter mittels der Leitung UL2 die Spannung UZL an der Zündleitung ZL, um auf diese Weise den Widerstand des Zündkreises zu überwachen, der sich aus dem Widerstand des Zündelementes ZP selbst und dem Widerstand der Zündleitung ZL zusammensetzt. Weiterhin dient die Überwachung der Spannung UZL der Bestimmung des Kapazitätswertes der Kapazität ZK und zur Überprüfung der Funktion der steuerbaren Stromquellen IQ1 und IQ2. Für die Serienschaltung des Zündelementes ZP mit der Kapazität ZK gibt es zwei Alternativen, die in den Schaltungsauszügen gemäß Fig. 2 und Fig. 3 dargestellt sind. Fig. 2 entspricht im wesentlichen der Schaltung des Zündelements ZP gemäß dem Stromlaufplan von Fig. 1, bei der also ein Anschluß des Zündelements ZP mit der Zündleitung ZL und der andere Anschluß des Zündelements ZP mit einem Anschluß der Kapazität ZK verbunden ist, deren zweiter Anschluß mit dem Masseanschluß E verbunden ist. In Fig. 2 ist noch zusätzlich gestrichelt eine gegebenenfalls aus Redundanzgründen vorgesehene zweite Kapazität ZK' eingezeichnet.

Bei einem anderen Ausführungsbeispiel der Erfindung gemäß Fig. 3 ist ein Anschluß des Zündelements ZP mit dem Masseanschluß E verbunden während der zweite Anschluß des Zündelements ZP mit dem ersten Anschluß der Kapazität ZK verbunden ist, deren zweiter Anschluß an die Zündleitung ZL führt. Auch hier ist wieder eine gegebenenfalls aus Redundanzgründen vorzusehende Kapazität ZK' gestrichelt eingezeichnet, die parallel zur Kapazität ZK geschaltet ist. Beide Ausführungsvarianten gemäß Fig. 2 und Fig. 3 zeichnen sich vorteilhaft dadurch aus, daß im Gegensatz zu den aus dem Stand der Technik bekannten Lösungen ein direktes Anlegen einer Gleichspannung, Z. B. der Versorgungsspannung UB, an die Zündleitungen nicht zu einer unbeabsichtigten Auslösung des Zündelements ZP führen kann.

Die Anordnung von Zündelement ZP und Kapazität ZK gemäß dem Ausführungsbeispiel nach Fig. 2 zeichnet sich weiter dadurch aus, daß bei einem Kurzschluß des Zündelements ZP an Punkt B zum Masseanschluß E auch weiterhin eine Zündung des Zündelements ZP im Crashfall möglich ist. Allerdings kann bei Auftreten eines derartigen Fehlers dann nicht mehr verhindert werden, daß ein unbeabsichtigtes Anlegen einer Gleichspannung an die zum Zündelement ZP führende Zündleitung eine Fehlauslösung, das heißt eine Zündung des Zündelements ZP, bewirkt.

Zur Vereinfachung der Darstellung ist in den Stromlaufplänen gemäß Fig. 1, Fig. 2 und Fig. 3 immer nur ein Zündelement ZP und Rückhaltemittel 10 dargestellt. Es ist selbstverständlich möglich, von der Auswerteschaltung AS mehrere Zündelemente ZP anzusteuern, die ihrerseits eine Mehrzahl von Rückhaltemitteln 10 aktivieren. Beispielsweise umfassen die Rückhaltemittel 10 zumindest einen Airbag für den Fahrer des Fahrzeugs und einen Gurtstraffer und/oder Airbag für den Beifahrer bzw. Gurtstraffer für alle Fahrzeuginsassen des Fahrzeugs.

Der Kapazitätswert der Kapazität ZK wird zweckmäßig derart gering bemessen, daß die in der Kapazität ZK speicherbare Ladungsmenge Q nicht ausreicht, um das Zündelement ZP zu aktivieren. So liegt in einem bevorzugten Ausführungsbeispiel der Erfindung der Kapazitätswert der Kapazität ZK unter etwa 10 Mikrofarad, insbesondere bei etwa 1 bis 3 Mikrofarad. Durch eine derartige Bemessung der Kapazität ZK wird dem Zündelement ZP bei jeder Ansteuerung der steuerbaren Stromquellen IQ1, IQ2 nur jeweils die Energie E' zugeführt, die unterhalb der für die Zündung notwendigen Energiemenge liegt. Erst eine wiederholte Zufuhr von Energiemengen E' zum Zündelement ZP führt zu dessen Aktivierung. Kapazitäten mit Kapazitätswerten der genannten Größenordnung sind vergleichsweise räumlich klein und lassen sich daher zweckmäßig mit dem Zündelement ZP selbst zu einem Zündbauelement 28 baulich vereinigen, das kostengünstig montierbar ist.

Im Ausführungsbeispiel nach Fig. 5 wird die Betriebsspannung UB über einen Schaltregler SR und eine in Vorwärtsrichtung gepolte Diode 14 einem als Energiereserve ER vorgesehenen Kondensator zugeführt, der durch den Schaltregler SR auf eine Spannung aufgeladen wird, die etwa das doppelte der Betriebsspannung UB beträgt. Ein Anschluß der Energiereserve ist mit je einem Anschluß a, von zwei, jeweils zwei Schaltstellungen aufweisenden Schaltern S1, S2, sowie mit einem Anschluß eines Analog-Digital-Wandlers ADC verbunden. Der andere Anschluß der Energiereserve ER ist einerseits mit dem Masse-Anschluß E und andererseits über einen Meßwiderstand 22 mit einem weiteren Eingangsanschluß des Analog-Digital-Wandlers ADC sowie mit je einem weiteren Schaltanschluß b der Schalter S1, S2 verbunden. Die Schalter S1, S2 bilden einen Teil eines Schaltkreises mit einem Zündbauelement 28, wobei jeder Schalter S1, S2 mit dem Zündbauelement 28 über einen Kopplungskondensator C1, C2 verbunden ist. Jeder Kopplungskondensator C1, C2 wird von einem hochohmigem Widerstand R1, R2 überbrückt, während das Zündbauelement 28 seinerseits von einem hochohmigen Widerstand R3 überbrückt ist. Das Zündbauelement 28 umfaßt eine Zündpille ZP, die in Serie mit einer Kapazität ZK geschaltet ist. Wie später noch ausführlicher erklärt werden wird, sind die Schalter S1, S2 zur Polaritätsumkehr des Zündbauelements 28 vorgesehen, wobei sie simultan betätigt werden und dadurch die Zündpille ZP aktivieren, die wiederum einen Gasgenerator zündet und auf diese Weise einen Luftsack aufbläst. Die hochohmigen Widerstände R1, R2 und R3 dienen zur Entladung der Kapazitäten C1, C2, ZK, wenn die Einrichtung außer Betrieb ist. Der Analog-Digital-Wandler ADC überwacht das Zündbauelement 28, sowie die Zündleitungen 32, die das Zündbauelement 28 der Ansteuerungsschaltung verbinden, sowie die Schalter S1, S2, indem die am Meßwiderstand 22 abfallende Spannung gemessen wird. Das digitale Ausgangssignal des Analog-Digital-Wandlers ADC wird jeder von zwei vorhandenen Kontrolleinheiten CU1, CU2 zugeführt, wobei die letztgenannte Kontrolleinheit CU2 auch mit einem digitalen Ausgangssignal der erstgenannten Kontrolleinheit CU1 versorgt wird.

Die Funktionsweise der elektronischen Einrichtung nach den Figuren 1 bis 3 wird im Folgenden auch unter Bezugnahme auf die in Fig. 4 dargestellten Impulsverläufe erläutert. Bei den Implusdiagrammen handelt es sich um vereinfachte Darstellungen, bei denen der Einfluß von Schaltkreisinduktivitäten nicht berücksichtigt worden ist und die Spannung UER an der Energiereserve ER als konstant angenommen worden ist.

Im Einzelnen sind in Fig. 4 die folgenden funktionalen Zusammenhänge dargestellt:

Fig.4a zeigt die dem Zündelement zugeführte Energie EZP als Funktion der Zeit. Fig. 4b zeigt den Strom IZL auf der Zündleitung ZL als Funktion der Zeit. Fig. 4c zeigt den Verlauf der Spannung UZL an der Zündleitung ZL als Funktion der Zeit. Fig. 4d zeigt den Verlauf des Stroms der steuerbaren Stromquelle IQ1 als Funktion der Zeit und Fig. 4e zeigt den Verlauf des Stroms der steuerbaren Stromquelle IQ2 als Funktion der Zeit.

Es werde angenommen, daß die Auswerteschaltung AS nach Auswertung des Ausgangssignals US des Sensors S eine sich abzeichnende Unfallsituation erkennt und zum Zeitpunkt t1 einen Zündbefehl für das Zündelement ZP erteilt. Über die Steuerleitung SL2 wird daraufhin die steuerbare Stromquelle IQ1 taktweise derart angesteuert, daß sie impulsförmige Stromimpulse der Zeitdauer T, wie in Fig. 4d dargestellt, an die Zündleitung ZL abgibt. Über die Steuerleitung SL3 wird weiter die steuerbare Stromquelle IQ2 von der Auswerteschaltung AS derart angesteuert, daß sie impulsförmig von der Zündleitung ZL Strom gemäß Darstellung nach Fig. 4e aufnimmt. Die Stromquellen IQ1 und IQ2 arbeiten also im Gegentaktbetrieb und sind jeweils abwechselnd für die Zeitdauer T leitend, so daß sich insgesamt auf der Zündleitung ZL der in Fig. 4d dargestellte Stromverlauf ergibt. Die Zeitdauer T des Stromflusses der einzelnen Stromimpulse ist zweckmäßig so gewählt, daß dem Zündelement ZP nur jeweils die Energie E' zugeführt wird, die wesentlich kleiner ist als die für die Zündung des Zündelements ZP notwendige Zündenergie EZP0. Wie aus Fig. 4a ersichtlich ist, wächst die dem Zündelement ZP zugeführte Zündenergie EZP unabhängig von der jeweils vorliegenden Stromrichtung gemäß Darstellung nach Fig. 4d linear mit der Zeit an. Die Erfindung geht hierbei von der Tatsache aus, daß die bei Stromdurchgang durch das Zündelement ZP diesem zugeführte Stromwärme von der Stromrichtung im wesentlichen unabhängig ist. Die für die Zündung des Zündelements ZP erforderliche Mindestenergie EZP0 würde dem Zündelement ZP zum Zeitpunkt t2 zugeführt werden. Die Auswerteschaltung AS erfaßt über die Leitung UL2 die Spannung UZL an der Zündleitung ZL (vergl. Darstellung in Fig. 4c) und ermittelt aus diesem Spannungsverlauf in Kenntnis des Stromverlaufs gemäß Fig. 4b sowohl den ohmschen Widerstand des Zündkreises als auch den Kapazitätswert der Kapazität ZK. Aus dem Spannungsverlauf UZL (Fig. 4c) läßt sich weiterhin exakt der Zündzeitpunkt des Zündelements erkennen. Erfolgt nämlich die Zündung während die steuerbare Stromquelle IQ1 über die Steuerleitung SL2 angesteuert ist, nimmt die Spannung auf der Zündleitung ZL einen maximalen Wert an, falls das Zündelement ZP infolge seiner Zerstörung im Zündfall den Zündkreis unterbricht und dadurch die Stormquelle IQ1 in Sättigung geht. Auch wenn in seltenen Fällen infolge des Zündvorgangs im Zündelement ZP ein Kurzschluß auftritt, kann dies anhand des Spannungsverlaufs (Fig. 4c) von der Auswerteschaltung AS erkannt werden. Falls die Zündung des Zündelements erfolgt während die steuerbare Stromquelle IQ2 über die Steuerleitung SL3 angesteuert ist, geht die Stromquelle IQ2 bei einer Unterbrechung des Zündelements in die Sättigung. Die Spannung an der Zündleitung ZL sinkt dann auf die niedrige Sättigungsspannung der Stromquelle IQ2 ab.

Anhand der Impulsdiagramme der Fig. 4 ist nur ein prinzipielles Ausführungsbeispiel der Erfindung erläutert, das sich dadurch auszeichnet, daß der Zündvorgang des Zündelements ZP durch mehrmaliges Ansteuern der Stromquellen IQ1, IQ2 im Gegentaktbetrieb für jeweils kurze und gleichlange Impulszeiten T abläuft. Es liegt im Rahmen der Erfindung, im Bedarfsfall hiervon abweichende Ansteuerzeiten der Stromquellen IQ1 und IQ2 zu wählen, die beispielsweise auch unterschiedlich lang ausfallen können. Weiterhin können die Stromquellen IQ1 und IQ2 von der Auswerteschaltung AS im Ansteuerungsfall auch auf verschiedene Stromwerte gesetzt werden. Schließlich kann es für Prüfzwecke des Zündelements und des gesamten Zündkreises auch sinnvoll sein, die Stromquelle IQ1, IQ2 mit zeitlicher Überlappung anzusteuern.

Sofern keine Messungen und Prüfungen am Zündelement ZP, dem Zündkreis und/oder den das Zündelement ZP ansteuernden Stromquellen IQ1, IQ2 durchzuführen sind, kann die Stromquelle IQ2 in einem Betriebsbereitschaftszustand zweckmäßig ständig leitend gesteuert werden, wodurch das Zündelement ZP niederohmig abgeschlossen wird. Hierdurch ergibt sich eine wesentlich geringere Anfälligkeit des Zündelements ZP gegen elektromagnetische Einstrahlungen von elektrischen Einrichtungen im Fahrzeug selbst oder auch aus der Umgebung. Auch hierdurch wird die Betriebssicherheit und Zuverlässigkeit der elektronischen Einrichtung stark verbessert.

EP 0 406 337 B1

Wie sich aus den Impulsdarstellungen der Fig. 4, insbesondere aus Fig. 4a und Fig. 4b ergibt, ist für einen erfolgreichen Zündvorgang des Zündelements ZP zum Zeitpunkt t2 ein mehrmaliges, aufeinanderfolgendes Ansteuern der Stromquellen IQ2, IQ1 durch die Auswerteschaltung AS im Gegentaktbetrieb für jeweils kurze Impulsbreiten T notwendig. Falls nun aufgrund eines sehr seltene Fehlers auch dieser, auf einem exakten Einhalten des Steuerrythmus der Stromquellen IQ1, IQ2 aufbauende Prozess gestört sein sollte, ermöglicht die erfindungsgemäße Einrichtung im Gegensatz zu den aus der Technik bekannten Lösungen auch noch eine Unterbrechung eines bereits befohlenen Zündvorgangs bevor das Zündelement ZP tatsächlich zur Zündung gelangt ist. Dies ist aufgrund der Tatsache möglich, daß in dem oben beschriebenen Ausführungsbeispiel dem Zündelement während des Zündvorgangs die Zündenergie lediglich taktweise dosiert zugeführt wird, so daß die Auslösung des Zündelements nicht schlagartig nach Erteilung des Zündbefehls, sondern nach einer genau festgelegten Zündverzugszeit erfolgt. Wird beispielsweise als Zündverzugszeit, diese entspricht dem Zeitintervall t2 minus t1 nach Fig. 4a, eine Millisekunde gewählt, so haben Kontrollmittel innerhalb der Auswerteschaltung AS hinreichend Zeit, die gegebenenfalls außer Kontrolle geratenen Schaltkreise in der Auswerteschaltung As durch einen Reset-Vorgang wieder in einen definierten Zustand zu bringen und die unkontrolliert befohlene Zündung des Zündelements ZP abzubrechen. Bei aus dem Stand der Tecknik bekannten Rückhaltesystemen ist dagegen die Zündung eines Zündelements ZP nach Erteilung eines Zündbefehls irreversibel, das heißt er führt zwangsläufig zu einer Auslösung des Zündelements, sofern nicht durch einen zusätzlichen, mechanisch wirkenden und beschleunigungsabhängigen Schalter im Zündkreis noch sichergestellt ist, daß bei einem unbeabsichtigt erteilten Zündbefehl der Zündkreis nicht geschlossen ist. Die große Sicherheit der erfindungsgemäßen Lösung ermöglicht den Verzicht auf derartige mechanische Schalter im Zündkreis, deren Funktionsfähigkeit im Fahrzeug nicht periodisch prüfbar ist und die daher ein hohes Risiko bei nicht redundanter Ausführung für die Verfügbarkeit, insbesondere Auslösefähigkeit in einer Unfallsituation darstellen. Die erfindungsgemäße Ausgestaltung der elektronischen Einrichtung in Form eines Zündelements, das in Serie mit einer Kapazität geschaltet ist, und die Ansteuerung dieses Zündelements über im Gegentakt betriebene Stromquellen, ermöglicht eine periodische Prüfung aller für eine korrekte Funktion im Zündkreis notwendigen Bauelemente, ohne daß, wie nach dem Stand der Techik notwendig, für die Überprüfungszwecke zusätzliche Bauelemente vorgesehen werden müßten. Bei bisher bekannten elektronischen Rückhaltesystemen sind allein zur Überwachung des elektrischen Widerstandes der Zündelemente viele zusätzliche Bauelemente am Zündkreis notwendig, die beispielsweise Hilfströme in den Zündkreis einspeisen. Da hierbei jedoch für die Überprüfung einerseits und die Zündung andererseits unterschiedliche Bauelemente vorgesehen werden müssen, ergibt sich ein außerordentlich hoher Aufwand und eine Verringerung der Zuverlässigkeit des Gesamtsystems. Ein weiterer Vorteil der erfindungsgemäßen Einrichtung liegt darin, daß auch ein Potentialunterschied zwischen dem Masseanschluß der Auswerteschaltung AS und dem Masseanschluß des Zündelements die Zünd- und Prüfvorgänge nicht störend beeinflußt. Obgleich im Ausführungsbeispiel nach Fig. 1 (bzw. Fig. 2, Fig. 3) zwei Stromquellen IQ1, IQ2 zur Zündung und Prüfung des Zündkreises vorgesehen werden und als Meßgröße nur die Spannung UZL an der Zündleitung ZL erfaßt wird, lassen sich auf einfache Weise folgende Zustände bzw. Bauelements überprüfen. Funktionsfähigkeit der steuerbaren Stromquellen IQ1, IQ2; Kurzschluß des Zündelements ZP in Bezug auf den positiven Anschluß der Spannungsversorgungsleitung oder in Bezug auf Masse; Fehlerhaftigkeit des Widerstandwertes des Zündelements ZP, Fehlerhaftigkeit des Kapazitätswertes der Kapazität ZK im Zündkreis; Unterbrechung der Zündleitung ZL; Potentialunterschied zwischen dem Massenanschluß der Auswerteschaltung AS und dem Masseanschluß des Zündelements ZP.

Weiterhin läßt sich bei einem schon in Gang befindlichen Zündvorgang sowohl bei Unterbrechung wie auch bei Kurzschluß des Zündelements der Zündzeitpunkt des Zündelements ZP exakt bestimmen. Dies ist besonders vorteilhaft, da nach erkannter Zündung die Energiezufuhr zum Zündelement ZP sofort eingestellt werden kann. Dies ist für eine zuverlässige Funktion von Rückhaltesystemen mit mehreren Rückhaltemitteln, die gegebenenfalls noch zeitlich nacheinander angesteuert werden müssen, von großer Bedeutung, da beispielsweise nach einer Abtrennung von der Betriebsspannung UB in der Energiereserve ER nur eine begrenzte Energiemenge zur Verfügung steht.

Durch die Ausführung der die Zündelemente ZP ansteuernden Endstufen als Stromquellen IQ1, IQ2 ergibt sich der weitere Vorteil, daß bei Vorliegen eines Kurzschlusses des Zündelements ZP nach Masse oder nach dem Pluspol der Versorgungsspanung keine Beschädigung der Endstufen auftreten kann. Weiterhin entstehen beim Zünden des Zündelements im Gegensatz zu bisher bekannten elektronischen Einrichtungen auch keine unkontrollierbar hohen Stromflüsse. Dies hat insbesondere den Vorteil, daß schmalere und platzsparendere Leiterbahnbreiten bei den gedruckten Schaltungen gewählt werden können, so daß sich eine insgesamt platzsparendere Anordnung ergibt. Hierzu trägt weiter auch die getaktete Ansteuerung der Stromquellen IQ1, IQ2 bei, da sich kleinere Bauelementformen wählen lassen, die nur für einen schnellen Impulsbetrieb und nicht für Dauerbeanspruchung ausgelegt werden müssen.

Die Funktionsweise des Ausführungsbeispiels nach Fig. 5 wird im folgenden unter Bezugnahme auf Fig.

6

5 sowie unter Bezugnahme auf die Impulsdiagramme von Fig. 6a) bis b) und Fig. 7a) bis d) erläutert. Jede Kontrolleinheit CU1, CU2 empfängt Ausgangssignale des ihr zugeordneten Sensors SR1, SR2. Diese Sensoren erfassen Signale, vorzugsweise Beschleunigungssignale des Fahrzeugs entlang vorgegebener Empfindlichkeitsachsen, anhand derer man feststellen kann, ob eine Unfallsituation vorliegt. Eine Unfallsituation wird beispielsweise dann angenommen, wenn der Beschleunigungswert entlang einer vorgebbaren Empfindlichkeitsachse einen vorgegebenen Grenzwert überschreitet. Die Kontrolleinheiten CU1, CU2 überwachen kontinuierlich die Ausgangssignale der Sensoren SR1, SR2 und bestimmten durch Auswertung dieser Sensorsignale, ob eine Unfallsituation vorliegt. Wenn die Ausgangssignale der Sensoren SR1, SR2 so beschaffen sind, daß auf eine Unfallsituation geschlossen werden muß, betätigt die Kontrolleinheit CU1 den Schalter S1, während gleichzeitig die andere Kontrolleinheit CU2 den Schalter S2 betätigt. Dies wird anhand der Impulsdiagramme von Fig. 6a) und Fig. 6b) erläutert, die den Schaltzustand der Schalter S1 und S2 darstellen. Als Ergebnis dieser Schaltvorgänge wird gemäß Fig. 6c) an der Zündpille ZP ein Spannungsimpuls VINF erzeugt, und zwar während der Dauer eines Zeitintervalls $\Delta$ T, währenddessen die beiden Schalter S1, S2 gleichzeitig betätigt sind. Der Spitzenwert dieses Spannungsimpulses VINF ergibt sich wie folgt:

$$VINF = 2UER \cdot \frac{RINF}{RINF + RM}$$

darin ist RINF der Widerstandswert der Zündpille ZP und UER die Spannung an der Energiereserve ER. Natürlich ist der anfängliche Spannungsimpuls nur etwa halb so groß. Der Spitzenwert der Energiemenge, die der Zündpille ZP zugeführt wird, ergibt sich somit zu

$$PINF = 4U^2ER \frac{RINF}{(RINF + RM)^2}$$

Somit ergibt sich als Energiemenge, die pro Zeitintervall $\Delta$ T, also bei umgeschalteten Schaltern S1, S2 der Zündpille ZP zugeführt wird:

$$\Delta E = \int_{\text{Beginn des Schaltzylus}}^{\text{Ende des Schaltzyklus}} 4U^2ER \frac{RINF}{(RINF + RM)^2} \cdot e^{-2t/\tau} \cdot dt$$

Für UER $\approx$ Konstant (ergibt sich bei CER >> ZK)
und für $\Delta$ T >> $\tau$ (z. B. $\Delta$ T = 5 $\tau$),
gilt folgende Näherung:

$$\Delta E = 2\tau (UER)^2 \frac{RINF}{(RINF + RM)^2}$$

Mit $\tau$ = (RINF + RM) · CTOT (CTOT = Gesamtkapazität)

$$E = 2CTOT \cdot UER^2 \frac{RINF}{RINF + RM}$$

$$= \frac{2CF (CC/2)}{CF + (CC/2)} \cdot UER^2 \cdot \frac{RINF}{RINF + RM}$$

(Annahme: C1 = C2 = CC)
Mit CTOT $\approx$ CF (also CC >> CF), gilt folgende Näherung:

$$E = 2CF (UER)^2 \cdot \frac{RINF}{RINF + RM}$$

Somit ergibt sich während jedes Zeitintervalls $\Delta$ T, während dessen die Schalter S1, S2 gleichzeitig geschlossen sind, eine festgelegte Energiemenge $\Delta$ E, die der Zündpille ZP zugeführt wird. Wenn die gesamte Energiemenge, die der Zündpille ZP zugeführt worden ist, einen für die Zündauslösung erforderlichen Energiegrenzwert überschritten hat, wird die Zündpille aktiviert, was letztlich, wie schon beschrieben, zur Auslösung des Airbags führt.

Wie anhand der zuvor schon erläuterten Ausführungsbeispiele bereits erwähnt, werden jedoch die Länge des Zeitintervalls $\Delta$ T der Ansteuerungsphase und die der Zündpille während der Ansteuerungsphase zugeführte Energiemenge $\Delta$ T derart bemessen, daß die während der Ansteuerungsphase (Zeitintervall $\Delta$ T) der Zündpille ZP zugeführte Energiemenge nicht ausreicht, um den für die Zündauslösung erforderlichen Energiegrenzwert zu erreichen. Die Länge des Zeitintervalls $\Delta$ T wird zweckmäßig auch so kurz gewählt, daß möglichst viele Energieteilbeträge $\Delta$ E zugeführt werden müssen, um den für die Zündlauslösung erforderlichen Energiegrenzwert zu erreichen. Ein außerordentlich wichtiger Aspekt für die Sicherheit der Einrichtung ist die Tatsache, daß durch die zuvor beschriebene zweckmäßig Bemessung des Energiebetrags $\Delta$ E und des Zeitintervalls $\Delta$ T eine Zündoperation auch dann noch unterbrochen werden kann, nachdem sie bereits gestartet worden war. Wenn z. B. beide Kontrolleinheiten CU1 und CU2 gleichzeitig festgestellt haben, daß ein Ansteuern der Zündpille ZP erforderlich ist, werden beide Schalter S1 und S2 gleichzeitig betätigt und ein Energieimpuls wird der Zündpille ZP zugeführt. Wenn jedoch nun, bevor der für die Zündauslösung erforderliche Zündgrenzwert erreicht worden ist, mindestens eine der beiden Kontrolleinheiten CU1, CU2 feststellen sollte, daß eine Ansteuerung der Zündpille ZP nicht mehr erforderlich ist, hat möglicherweise ein Systemfehler vorgelegen oder die kritischen Sensor-Ausgangssignale der Sensoren SR1, SR2 waren lediglich vorübergehender Natur. Beides bedeutet, daß eine Aktivierung der Zündpille ZP nicht mehr erforderlich ist. In diesem Fall würde der der Kontrolleinheit jeweils zugeordnete Schalter S1, bzw. S2 nicht mehr länger aktiviert, mit der Folge, daß keine Energieimpulse mehr der Zündpille ZP zugeleitet würden. Auf diese Weise würde eine Auslösung des Airbag verhindert. Diese Eigenschaft hebt sich, wie schon erwähnt, außerordentlich vorteilhaft von den nach dem Stand der Technik bekannten Einrichtungen ab, die nach Einleitung eines Zündvorgans keine Möglichkeit zur Unterbrechung dieses Zündvorgangs mehr bieten.

Wenn Spannungs- und Energieimpulse der Zündpille ZP zugeleitet werden, kann der sich am Meßwiderstand 22 entwickelnde Spannungsabfall VM zur Feststellung von Schaltungsfehlern, beispielsweise zur Feststellung von Kurzschlüssen, ausgewertet werden. Der sich am Meßwiderstand 22 entwickelnde Spannungsabfall VM wird dazu zweckmäßig mit einem Sollwert verglichen, der in einer der Kontrolleinheiten CU1, CU2 oder auch in beiden gespeichert ist. Der Vergleich wird nach folgender Beziehung durchgeführt.

$$VM(t) \; = \; 2UER(t) \cdot \frac{RM}{RINF + RM} \cdot e^{-\,t/\tau}$$

für alle Zyklen, Zyklus 1 .... n, nach dem ersten Ansteuerungszyklus, da der Spannungswert im ersten Ansteuerungszyklus To nur die Hälfte des Wertes in den folgenden Zyklen beträgt. Hierbei gilt

$$\tau \approx CTOT \; (RINF \; + \; RM) \approx CF \; (RINF \; + \; RM)$$

wobei angenommen wird

$$CTOT \approx CF \quad (d.h. \; C1 \; = \; C2 \; >> \; CF).$$

Auf diese Weise können, durch Überwachen des Spannungsabfalls VM am Meßwiderstand 22, unabhängig voneinander eine Änderung im Widerstandswert RINF der Zündpille ZP und im Kapazitätswert der Kapazität ZK festgestellt werden. So werden z. B. bei einer Änderung des Widerstandswertes RINF der Zündpille ZP sich sowohl die Eingangsamplitude des Spannungsabfalls VM und die Zeitkonstante $\tau$ ändern, während eine Änderung des Kapazitätswertes von ZK lediglich die Zeitkonstante $\tau$ beeinflussen wird. Der Widerstandswert RM wird während der Ansteuerungsphase kontinuierlich von beiden Kontrolleinheiten CU1 und CU2 überwacht.

Abweichungen von abgespeicherten Sollwerten werden von den Kontrolleinheiten CU1 und CU2 überwacht und bewertet. Verschiedene Kurzschlußarten können dabei auf die nachfolgend beschriebene Weise erkannt werden.

A. Kurzschluß nach Masse am Schaltungspunkt A

Wie in Fig. 7c) dargestellt, ist der Spannungabfall VINF über der Zündpille ZP = 0 während des ersten Ansteuerungszyklus T0 (d. h. also, bevor der Spannungabfall VM über dem Meßwiderstand 22 gemessen wird). In zeitlich folgenden Ansteuerungsphasen (2n-1), n=1, 2, ...., n (z. B. T1, T2 ...), wenn also die Schalter S1, S2 über die Anschlüsse b geschlossen sind, beträgt der Maximalwert des Spannungsabfalls VINF = UER und die Zeitkonstante $\tau$1 ist:

$$\tau 1 = \frac{CF\,CC}{CF + CC} \cdot RINF \quad (C1 = C2 = CC)$$

In folgenden Ansteuerungsphasen (2n), n=1, 2, ....,n (z. B. T2, T4), wenn die Schalter S1, S2 über die Kontakte a geschlossen sind, gilt:

$$VINF = UER \cdot \frac{RINF}{RINF + RM}$$

und

$$\tau 2 = \frac{CF\,CC}{CF + CC} (RINF + RM)$$

So stellen sich am Meßwiderstand 22 folgende charakteristische Spannungswerte gemäß Fig. 7d ein:

$$\text{Für ungerade Ansteuerungsphasen (2n-1)} \quad : \quad VM = UER \text{ und } \tilde{\tau}3 = CC \cdot RM$$

$$\text{Für gerade Ansteuerungsphasen (2n)} \quad : \quad VM = UER \cdot \frac{RM}{RINF + RM}$$

$$\text{und } \tilde{\tau}2 = \frac{CINF \cdot CC}{CINF + CC} (RINF + RM)$$

Durch Messung der Änderungen im Spannungsabfall VM kann also ein Kurzschluß am Schaltungspunkt A der Schaltung gegen Masse festgestellt werden. Die Kontrolleinheiten CU1, CU2 können dann entscheiden, ob der Auslösevorgang zu unterbrechen ist (in diesem Fall werden die Schalter S1, S2 nicht weiter betätigt) oder fortgesetzt werden soll mit verlängerten Ansteuerungsphasen, um eine Kompensation zu bilden, für die geringere Energiemenge, die aufgrund des Kurzschlusses in jeder Ansteuerungsphase an die Zündpille ZP lieferbar ist.

B. Kurzschluß am Schaltungspunkt B nach Masse

In diesem Fall entsteht eine analoge Situation, wie schon zuvor beschrieben; der Fehler wird festgestellt durch Messung des Spannungsabfalls VM über dem Meßwiderstand 22 mit seinem Widerstandswert RM.

C. Kurzschluß der Schaltungspunkte A bzw. B zur Betriebsspannung UB

Jeder dieser Fälle kann durch Messung des Spannungsabfalls VM über dem Meßwiderstand 22 und Vergleich des Meßwertes mit einem abgespeicherten Sollwert festgestellt werden. Auch bei diesen Fehlerfällen kann jedoch die Zündpille ZP immer noch angesteuert werden und die erforderliche Zündenergie an der Zündpille ZP dadurch zugeführt werden, daß die Ansteuerungsphasen durch die Kontrolleinheiten CU1, CU2 entsprechend verlängert werden.

Die vorliegende Erfindung ist nicht beschränkt auf die zuvor angegebenen Schaltungseinzelheiten. Z. B. kann jede der Kontrolleinheiten CU1, CU2 in einem weiteren Ausführungsbeispiel ersetzt werden durch eine analoge Bypass-Schaltung, die jeden der Schalter S1, S2 ansteuern kann, wobei die Ansteuerung jedes der Schalter S1, S2 nur für eine vorgebbare Zeitdauer ermöglicht wird.

Auch versteht es sich, daß im Rahmen der Erfindung eine beliebige Anzahl von Ansteuerungsschaltungen und Zündpillen mit der Energiereserve ER verbunden werden kann, um ggfs. eine große Anzahl von Rückhaltemitteln (Airbag und/oder Gurtstraffer) anzusteuern. Die Anzahl der Steuerungsleitungen zum Analog-Digital-Wandler ADC und zu den Kontrolleinheiten CU1, CU2 müßte entsprechend vergrößert werden. Jede Schaltungsanordnung könnte natürlich mehr als zwei unabhängig voneinander betätigbare Schalter S1, S2 aufweisen, wobei jeder Schalter seinen Schaltbefehl von einer zugeordneten Kontrolleinheit erhalten könnte.

**Patentansprüche**

1. Elektronische Einrichtung zum Ansteuern von Sicherungsmitteln (10) für Fahrzeuginsassen mit einem Sensor (S), mit einer Auswerteschaltung (AS) für das Ausgangssignal des Sensors (S), mit mindestens einem von der Auswerteschaltung (AS) ansteuerbaren Zündelement (ZP), das in Serie zu einer Kapazität (ZK) geschaltet ist, sowie mit einer Stromversorgung, dadurch gekennzeichnet, daß das Zündelement

9

(ZP) taktweise ansteuerbar ist und daß dem Zündelement (ZP) bei jedem Ansteuervorgang höchstens eine Energiemenge (E') zuführbar ist, die unter einem für die Aktivierung des Zündelements (ZP) erforderlichen Energiegrenzwert (EZP0) liegt.

2. Einrichtung nach Anspruch 1, dadurch gekennzeichnet, daß ein Anschluß des Zündelements (ZP) oder ein Anschluß der Kapazität (ZK) mit dem Masseanschluß (E) verbunden ist.

3. Einrichtung nach einem der Ansprüche 1 und 2, dadurch gekennzeichnet, daß die Stromversorgung von der Auswerteschaltung (AS) steuerbare Stromquellen/Stromsenken (IQ1, IQ2) umfaßt, die das Zündelement (ZP) mit einem Prüf- bzw. Zündstrom beaufschlagen.

4. Einrichtung nach einem der Ansprüche 1 bis 3, dadurch gekennzeichnet, daß die Stromquellen (IQ1, IQ2) taktweise ansteuerbar sind, und daß die Taktzeit (T) derart bemessen ist, daß der während der Taktzeit (T) durch das Zündelement (ZP) fließende Strom diesem nur eine Energie (E') zuführt, die unterhalb der für die Zündung des Zündelements (ZP) notwendigen Mindestenergie (EZP0) liegt.

5. Einrichtung nach einem der Ansprüche 1 bis 4, dadurch gekennzeichnet, daß die Stromquellen (IQ1, IQ2) im Gegentaktbetrieb ansteuerbar sind.

6. Einrichtung nach einem der Ansprüche 1 bis 5, dadurch gekennzeichnet, daß die Stromquellen (IQ1, IQ2) mit gleich langen Taktzeiten (T) ansteuerbar sind.

7. Einrichtung nach einem der Ansprüche 1 bis 6, dadurch gekennzeichnet, daß der Kapazitätswert der Kapazität (ZK) derart gering bemessen ist, daß die in der Kapazität (ZK) speicherbare Ladungsmenge (Q) nicht ausreicht, um das Zündelement (ZP) zu aktivieren.

8. Einrichtung nach einem der Ansprüche 1 bis 7, dadurch gekennzeichnet, daß der Kapazitätswert der Kapazität (ZK) kleiner als 10 Mikrofarad ist und vorzugsweise zwischen etwa 1 und 3 Mikrofarad liegt.

9. Einrichtung nach einem der Ansprüche 1 bis 8, dadurch gekennzeichnet, daß die Kapazität (ZK) und das Zündelement (ZP) zu einem Zündbauelement (28) baulich vereinigt sind.

10. Einrichtung nach einem der Ansprüche 1 bis 9, dadurch gekennzeichnet, daß die Einrichtung eine Ansteuerschaltung zur Zufuhr von elektrischer Energie zu einem Zündbauelement (28), um eine aufblasbare Rückhalteeinrichtung (10) zu aktivieren, sowie mindestens eine Reserve-Energiequelle (ER) und eine Zündpille (ZP) umfaßt und eine Schaltungsanordnung mit Verbundungsmitteln zur Verbindung der elektrischen Energiequelle (UB, ER) mit der Zündpille (ZP), wobei die Verbindungsmittel eine Mehrzahl von Schaltern (S1, S2) umfassen, die in Serie zum Zündbauelement (28) geschaltet sind, wobei jeder Schalter (S1, S2) unabhängig voneinander durch zugeordnete Kontrolleinrichtungen (CU1, CU2) ansteuerbar ist nach Maßgabe der Feststellung einer Unfallsituation durch zugeordnete Kontrollmittel (SR1,SR2).

11. Einrichtung nach Anspruch 10, dadurch gekennzeichnet, daß jeder Kontrolleinheit (CU1, CU2) zugeordnet ist ein Sensor (SR1, SR2), um jeder Kontrolleinheit (CU1, CU2) unabhängig von der anderen die Feststellung zu ermöglichen, ob eine Unfallsituation vorliegt oder nicht.

12. Einrichtung nach einem der Ansprüche 10, 11, dadurch gekennzeichnet, daß mindestens einer der Schalter (S1, S2), ausgelöst durch ein Unfallsignal, periodisch ansteuerbar ist zur Verbindung der Reserve-Energiequelle (ER) mit der Zündpille (ZP) und zur Beaufschlagung der Zündpille (ZP) mit Energie aus der Reserve-Energiequelle (ER), wobei die in einem einzigen Schaltintervall des Schalters (S1, S2 in der Zündpille (ZP) zugeführte Energie E kleiner ist als als die für die Zündauslösung erforderliche Energiemenge.

13. Einrichtung nach einem der Ansprüche 10 bis 12, dadurch gekennzeichnet, daß Kontrollmittel (ADC, CU1, CU2) zur Überwachung des Schaltverhaltens der Einrichtung vorgesehen sind.

14. Einrichtung nach einem der Ansprüche 10 bis 13, dadurch gekennzeichnet, daß Mittel (ADC, CU1, CU2, 22) vorgesehen sind zur Überwachung der elektrischen Signale, die bei Verbindung der Zündpille (ZP) mit der Schaltungsanordnung auftreten und zum Vergleich dieser Signale mit in Speichermitteln abgespeicherten Sollwerten.

15. Verfahren zum Betrieb einer Einrichtung zum Ansteuern von Sicherungsmitteln (10) für Fahrzeuginsassen, mit einem Sensor (S), mit einer Auswerteschaltung (AS) für das Ausgangssignal des Sensors (S) und mit mindestens einem von der Auswerteschaltung (AS) ansteuerbaren Zündelement (ZP), das in Serie mit einer Kapazität (ZK) geschaltet ist, nach einem der Ansprüche 1 bis 14, dadurch gekennzeichnet, daß das Zündelement (ZP) taktweise angesteuert wird und daß dem Zündelement (ZP) bei jedem Ansteuervorgang höchstens eine Energiemenge (E') zugeführt wird, die unter einem für die Aktivierung des Zündelements (ZP) erforderlichen Energiegrenzwert (EZPO) liegt.

16. Verfahren nach Anspruch 15, dadurch gekennzeichnet, daß das Zündelement (ZP) von zwei steuerbaren Stromquellen (IQ1, IQ2) angesteuert wird, wobei diese das Zündelement (ZP) im Gegentaktbetrieb ansteuern.

17. Verfahren nach einem der Ansprüche 15, 16, dadurch gekennzeichnet, daß in einem Betriebsbereitschaftszustand eine der steuerbaren Stromquellen (IQ1, IQ2) derart leitend gesteuert wird, daß das Zündelement (ZP) niederohmig abgeschlossen wird.

18. Verfahren nach einem der Ansprüche 16 bis 17, dadurch gekennzeichnet, daß bei Auftreten und Erkennen eines Fehlers nach Einleitung eines Zündvorgangs durch taktweises Ansteuern des Zündelements (ZP) der Zündvorgang durch Beendigung der taktweisen Ansteuerung unterbrochen wird.

## Claims

1. Electronic device for activating safety means (10) for vehicle passengers, comprising a sensor (5), an analysing circuit (AS) for the output signal of the sensor (5), at least one igniting element (ZP) which can be activated by the analysing circuit (AS) and which is connected in series with a capacitance (ZK), and with a power supply, characterised in that the igniting element (ZP) can be cyclically activated and that the igniting element (ZP) can be supplied, during each activation process, with a maximum energy quantity (E') which is below an energy limit value (EZPO) required for activating the igniting element (ZP).

2. Device according to Claim 1, characterised in that a terminal of the igniting element (ZP) or a terminal of the capacitance (ZK) is connected to the earth terminal (E).

3. Device according to one of Claims 1 and 2, characterised in that the power supply comprises current sources/current sinks (IQ1, IQ2) which are controllable by the analysing circuit (AS) and which act upon the igniting element (ZP) with a test or ignition current.

4. Device according to one of Claims 1 to 3, characterised in that the current sources (IQ1, IQ2) can be cyclically activated and that the cycle time (T) is dimensioned in such manner that the current flowing through the igniting element (ZP) during the cycle time (T) only supplies it with an energy (E') which is below the minimum energy (EZPO) necessary for the ignition of the igniting element (ZP).

5. Device according to one of Claims 1 to 4, characterised in that the current sources (IQ1, IQ2) can be activated in push-pull mode.

6. Device according to one of Claims 1 to 5, characterised in that the current sources (IQ1, IQ2) can be activated with equally long cycle times (T).

7. Device according to one of Claims 1 to 6, characterised in that the capacitance value of the capacitance (ZK) is dimensioned to be low enough for the charge quantity (Q) which can be stored in the capacitance (ZK) not to be sufficient for activating the igniting element (ZP).

8. Device according to one of Claims 1 to 7, characterised in that the capacitance value of the capacitance (ZK) is less than 10 microfarad and is preferably between about 1 and 3 microfarad.

9. Device according to one of Claims 1 to 8, characterised in that the capacitance (ZK) and the igniting element (ZP) are constructionally combined to form one igniting component (28).

10. Device according to one of Claims 1 to 9, characterised in that the device comprises an activation circuit for supplying electrical energy to an igniting component (28) in order to activate an inflatable restraining device (10), and at least one energy source reservoir (ER) and an igniting cap (ZP) and a circuit arrangement with connecting means for connecting the electrical energy source (UB, ER) to the igniting cap (ZP), the connecting means comprising a plurality of switches (S1, S2) which are connected in series with the igniting component (28), each switch (S1, S2) being activatable by associated control devices (CU1, CU2) independently of one another as determined by an accident situation being detected by associated control means (SR1, SR2).

11. Device according to Claim 10, characterised in that each control unit (CU1, CU2) is associated with a sensor (SR1, SR2) in order to enable each control unit (CU1, CU2) to determine independently of the other one whether an accident situation is occurring or not.

12. Device according to one of Claims 10, 11, characterised in that at least one of the switches (S1, S2), triggered by an accident signal, can be periodically activated for connecting the energy source reservoir (ER) to the igniting cap (ZP) and for acting upon the igniting cap (ZP) with energy from the energy source reservoir (ER), the energy E supplied in the igniting cap (ZP) in a single switching interval of the switch (S1, S2) being less than the energy quantity required for triggering ignition.

13. Device according to one of Claims 10 to 12, characterised in that control means (ADC, CU1, CU2) are provided for monitoring the switching characteristic of the device.

14. Device according to one of Claims 10 to 13, characterised in that means (ADC, CU1, CU2, 22) are provided for monitoring the electrical signals which occur when the igniting cap (ZP) is connected to the circuit arrangement, and for comparing these signals with nominal values stored in storage means.

15. Method for operating a device for activating safety means (10) for vehicle passengers, comprising a sensor (S), an analysing circuit (AS) for the output signal of the sensor (S) and at least one igniting element (ZP) which can be activated by the analysing circuit (AS) and which is connected in series with a capacitance (ZK), according to one of Claims 1 to 14, characterised in that the igniting element (ZP) is cyclically activated and that in each activation process, the igniting element (ZP) is supplied with a maximum energy quantity (E') which is below an energy limit value (EZPO) required for the activation of the igniting element (ZP).

16. Method according to Claim 15, characterised in that the igniting element (ZP) is activated by two controllable current sources (IQ1, IQ2), which activate the igniting element (ZP) in push-pull mode.

17. Method according to one of Claims 15, 16, characterised in that, in a state of operational readiness, one of the controllable current sources (IQ1, IQ2) is controlled to conduct in such a manner that the igniting element (ZP) is terminated with a low resistance.

18. Method according to one of Claims 16 to 17, characterised in that, when a fault occurs and is detected after an ignition process has been initiated by cyclically activating the igniting element (ZP), the ignition process is interrupted by ending the cyclic activation.

## Revendications

1. Installation électronique de commande de moyens de sécurité (10) pour des passagers avec un capteur (5), un circuit d'exploitation (AS) du signal de sortie du capteur (5) et au moins un élément d'allumage (ZP) commandé par le circuit d'exploitation (AS), cet élément étant branché en série sur un condensateur (ZK), ainsi qu'une alimentation en courant, installation caractérisée en ce que l'élément d'allumage (ZP) est commandé en cadence et en ce qu'à chaque opération de commande l'élément d'allumage (ZP) reçoit une quantité d'énergie (E') maximale qui est inférieure à la valeur limite de l'énergie nécessaire (EZPO) pour activer l'élément d'allumage (ZP).

2. Installation selon la revendication 1, caractérisée en ce qu'une borne de l'élément d'allumage (ZP) ou une borne du condensateur (ZK) est reliée à la masse (E).

3. Installation selon l'une des revendications 1 et 2, caractérisée en ce que l'alimentation en courant du circuit d'exploitation (AS) comprend des sources de courant/puits de courant (IQ1, IQ2) commandés qui alimentent l'élément d'allumage (ZP) en courant de contrôle ou d'allumage.

4. Installation selon l'une des revendications 1 à 3, caractérisée en ce que les sources de courant (IQ1, IQ2) sont commandées en cadence et en ce que la durée (T) de la cadence est choisie pour que le courant traversant l'élément d'allumage (ZP) pendant la durée de la cadence (T) ne fournisse à cet élément qu'une énergie (E') inférieure à la quantité d'énergie minimale (EZPO) nécessaire au déclenchement de l'élément d'allumage (ZP).

5. Installation selon l'une des revendications 1 à 4, caractérisée en ce que les sources de courant (IQ1, IQ2) sont commandées à contretemps.

6. Installation selon l'une des revendications 1 à 5, caractérisée en ce que les sources de courant (IQ1, IQ2) sont commandées avec des temps de cadence (T) de même longueur.

7. Installation selon l'une des revendications 1 à 6, caractérisée en ce que la capacité du condensateur (ZK) est choisie tellement faible pour que la charge (Q) accumulable dans le condensateur (ZK) ne soit pas suffisante pour activer l'élément d'allumage (ZP).

8. Installation selon l'une des revendications 1 à 7, caractérisée en ce que la capacité du condensateur (ZK) est inférieure à 10 microfarads et se situe de préférence entre environ 1 et 3 microfarads.

9. Installation selon l'une des revendications 1 à 8, caractérisée en ce que le condensateur (ZK) et l'élément d'allumage (ZP) sont réunis constructivement en un seul composant d'allumage (28).

10. Installation selon l'une des revendications 1 à 9, caractérisée en ce qu'elle comprend un circuit de commande pour fournir de l'énergie électrique à un composant d'allumage (28), pour activer une installation de retenue (10), gonflable, ainsi qu'au moins une source d'énergie (ER) de réserve et une pastille d'allumage (ZP) et un circuit avec des moyens de liaison pour relier les sources d'énergie électrique (UB, ER) à la pastille d'allumage (ZP), les moyens de liaison comprenant plusieurs commutateurs (S1, S2) branchés en série sur le composant d'allumage (28), chaque commutateur (S1, S2) pouvant être commandé indépendamment par des installations de contrôle (CU1, CU2) correspondantes après avoir détecté une situation d'accident par des moyens de contrôle (SR1, SR2) correspondants.

11. Installation selon la revendication 10, caractérisée par un capteur (SR1, SR2) associé à chaque unité de contrôle (CU1, CU2) pour permettre à chaque unité de contrôle (CU1, CU2) de déceler, indépendamment des autres, s'il existe ou non une situation d'accident.

12. Installation selon l'une des revendications 10, 11, caractérisée en ce sens qu'au moins l'un des commutateurs (S1, S2) peut être commandé périodiquement, de façon déclenchée par un signal d'accident pour relier la source d'énergie de réserve (ER) à la pastille d'allumage (ZP) et pour alimenter cette pastille (ZP) avec de l'énergie de la source d'énergie de réserve (ER), l'énergie $\Delta E$ fournie au cours d'un unique intervalle de commutation du commutateur (S1, S2) à la pastille d'allumage (ZP) étant inférieure à la quantité d'énergie nécessaire au déclenchement de l'allumage.

13. Installation selon l'une des revendications 10 à 12, caractérisée par des moyens de contrôle (ADC, CU1, CU2) pour surveiller le comportement en commutation de l'installation.

14. Installation selon l'une des revendications 10 à 13, caractérisée par des moyens (ADC, CU1, CU2, 22) pour surveiller les signaux électriques générés lorsque la pastille d'allumage (ZP) est reliée au circuit et pour comparer ces signaux à des valeurs de consigne mises en mémoire.

15. Procédé de mise en oeuvre d'une installation pour commander des moyens de sécurité (10) pour des passagers de véhicules, comportant un capteur (5) avec un circuit d'exploitation (AS) pour le signal de sortie du capteur (5) et au moins un élément d'allumage (ZP) commandé par le circuit d'exploitation (AS), cet élément étant branché en série sur un condensateur (ZK), selon l'une des revendications 1 à 14, procédé caractérisé en ce que l'élément d'allumage (ZP) est commandé en cadence et en ce que l'élément d'allumage (ZP) reçoit à chaque opération de commande, au maximum, une quantité d'énergie (E') qui est inférieure à la valeur limite de l'énergie (EZPO) nécessaire au déclenchement de l'élément d'allumage (ZP).

16. Procédé selon la revendication 15, caractérisé en ce que l'élément d'allumage (ZP) est commandé par deux sources de courant commandées (IQ1, IQ2) et ces sources commandent l'élément d'allumage (ZP) à contretemps.

17. Procédé selon l'une des revendications 15, 16, caractérisé en ce que pour un état d'aptitude au fonctionnement, l'une des sources de courant commandées (IQ1, IQ2) est commandée à l'état passant de façon que l'élément d'allumage (ZP) soit bouclé de manière faiblement ohmique.

18. Procédé selon l'une des revendications 16, 17, caractérisé en ce qu'à l'arrivée et à la détection d'un défaut, après déclenchement d'une opération d'allumage par commande cadencée de l'élément d'allumage (ZP), on interrompt l'opération d'allumage en terminant la commande cadencée.

FIG. 1

FIG. 2

FIG. 3

# FIG. 4

# FIG.5

# FIG.6

$a)$

$b)$

$c)$

$d)$

# FIG. 7

a)

$S1a$

$S1b$

$t$

b)

$S2a$

$S2b$

$t$

c)

$V_{INF}$

$= UER \dfrac{R_{INF}}{R_{INF}+R_M}$

$UER$

$T_0$  $T_1$  $T_2$  $\tau_1$  $\tau_2$  $\tau_3$  $t$

d)

$V_M$

$UER$

$UER \dfrac{R_{INF}}{R_{INF}+R_M}$

$\tau_3$  $\tau_2$  $t$